# EUROPEAN PATENT APPLICATION

(11) **EP 4 274 253 A1**
(43) Date of publication of application: **08.11.2023**
(21) Application number: 22171076.7
(22) Date of filing: 02.05.2022
(51) Int. Cl.: H04Q 11/00

(54) **RECONFIGURABLE, HIGH CAPACITY PASSIVE OPTICAL NETWORK BASED ON MULTI-CORE OPTICAL FIBRE**

(71) Applicant: Nokia Solutions and Networks Oy, 02610 Espoo (FI)
(72) Inventor: STRAUB, Michael, 75433 Maulbronn (DE); BONK, Rene, 75181 Pforzheim (DE)
(74) Representative: Louis Pöhlau Lohrentz

(57) **Abstract**

A PON system (100) is proposed to address the capacity, reliability and flexibility limitations of conventional arrangements by utilizing multi-core optical fibre (10) (i.e., k cores formed within a single fibre) and multi-channel passive optical splitters/combiners (40) to form the ODN infrastructure (30), providing an immediate increase in capacity from one channel to *k* parallel channels. It is contemplated that all *k* cores will terminate within each and every ONU, providing the maximum transmission capacity within MCF-based ODN, while also enabling intelligent and flexible resource assignment to meet future customer needs. Both the OLT and ONUs are designed to support reconfigurable allocation of cores of the MCF to support different services, types of data, signaling and monitoring, controlled by an intelligent scheduler at the OLT as required on a case-by-case basis. The ability of maintain a static configuration of a MCF-based ODN, while enabling the flexibility to reconfigure the operation of the network itself is a distinct technical advantage that is now provided.

## Description

### Technical Field

The present disclosure is directed to the implementation of a passive optical network (PON), particularly a PON system based upon the use of multi-core fibre (MCF) to increase the communication capacity between an optical line terminal (OLT) and a group of optical network units (ONUs).

### Background

PON systems are considered as an excellent choice for providing access network communication capabilities between a backbone network and end-users. Operating in the downstream direction as a broadcast (point-to-multipoint) network between an OLT and a plurality of ONUs, the passive infrastructure configuration of splitter/combiners and interconnecting single mode optical fibre creates an optical distribution network (ODN) topology is reliable and able to handle a reasonable load of data traffic.

New applications, however, present a need for increased capacity, operational reliability, and flexibility. To increase capacity, wavelength-division multiplexing (WDM) may be used to configure different PONs to operate on different wavelengths. While able to provide an immediate increase in channels, the use of multiple wavelengths requires a large and expensive effort to be undertaken to incorporate WDM transmitters and filters within the PON (in both the OLT and ONUs).

### Summary

It is proposed to address the capacity, reliability and flexibility limitations that exist within a conventional PON system by utilizing multi-core optical fibre (i.e., *k* cores formed within a single fibre) and multi-channel passive optical splitters/combiners to form the ODN infrastructure, providing an immediate increase in capacity from one channel to *k* parallel channels. It is contemplated that all *k* cores will terminate within each and every ONU, providing the maximum transmission capacity within the multi-core fibre (MCF), while also enabling intelligent and flexible resource assignment to meet future customer needs. Both the OLT and ONUs are designed to support reconfigurable allocation of cores within the MCF to support different services, types of data, signaling and monitoring, as required on a case-by-case basis. The ability of maintain a static configuration of a MCF-based ODN, while enabling the flexibility to reconfigure the operational features of the network itself is a distinct technical advantage that is now provided.

In one embodiment, the OLT and each ONU may be specifically configured to include k separate transceivers, each dedicated to a different core within the MCF and thus able to support communication on k separate channels. Alternatively, downstream transmission from individual transmitters at the OLT may be allocated to separate cores, with upstream transmission from ONU transmitters associated with other cores (i.e., an uni-directional communication configuration enabled by the use of multiple cores. Advantageously, inasmuch as all of the cores are included within a single fibre, all of the communication channels (cores) are subjected to the same environmental conditions; little or no phase difference between parallel signal paths should exist.

Advances in intelligent core assignment are also possible. For example, one or more cores may be reserved to support the bi-directional transmission of signaling, monitoring, and maintenance information between the OLT and the ONUs. A dedicating signal channel may be configured to support the transmission of upstream preamble information associated with data bursts, and further may be configured to include ranging windows, thus eliminating the need to disrupt data transmission to perform ranging functions.

An exemplary embodiment takes the form of a PON system including an OLT for providing point-to-multipoint communication with a plurality of ONUs and a MCF-based ODN. The MCF-based ODN enabling reconfigurable point-to-multipoint communication and comprising: at least one passive splitter/combiner including a single port connection side and a multiple port connection side and a plurality of sections of MCF including a feeder section of MCF for coupling the OLT to the single port connection side of at least one passive splitter/combiner and a set of M drop sections of MCF for coupling the plurality of M ONUs to the multiple port connection side of at least one passive splitter/combiner. Each section of MCF comprises a plurality of *k* separate core regions forming a plurality of *k* separate, parallel communication channels between the OLT and each ONU of the plurality of ONUs.

The embodiments and aspects disclosed herein may be combined in various ways.

### Brief Description of the Drawings

Example embodiments will become more fully understood from the detailed description given hereinbelow and the accompanying drawings, which are given by way of illustration only and thus are not limiting of this disclosure.
FIG. 1 is an end-view of two different types of MCF, with FIG. 1(a) illustrating a 4-core MCF and FIG. 1(b) illustrating a 7-core MCF;
FIG. 2 illustrates a first example of an MCF-based PON system formed in accordance with the principles of the present invention, the ODN formed of a plurality of sections of MCF and passive splitter/combiners, providing full interconnection between the *k* cores of a feed MCF exiting the OLT and the *k* cores of each drop MCF terminating at the various ONUs;
FIG. 3 shows an example configuration of a multi-channel passive power splitter/combiner suitable for use in the ODN of FIG. 2;
FIG. 4 illustrates a first example configuration of an OLT that may be supported by the MCF-based ODN (such as shown in FIG. 2), in this case based upon the use of a plurality of *k* transceivers to provide a set of *k* parallel transmission paths between the OLT and each ONU;
FIG. 5 shows a second example configuration of an OLT that may be supported by the MCF-based ODN (such as shown in FIG. 2), in this case based upon the use of a set of transmitter elements allocated for use with a first set of core regions of the feeder MCF and a separate set of receiver elements allocated for use with a second set of core regions of the feeder MCF;
FIG. 6 shows an example configuration of an ONU that may be used with second example configuration of the OLT as shown in FIG. 5;
FIG. 7 illustrates a configuration of the OLT specifically arranged to allocate a separate signaling core (channel) to transmit upstream signaling information (i.e., a signaling core/channel) from the ONUs, the OLT in this configuration including an upstream control unit coupled to the signaling core for receiving the signaling information and directing it to a designated receiver within the OLT;
FIG. 8 depicts an example utilization of a signaling core with a pair of upstream data communication cores, as used with the configuration of FIG. 7, showing the use of the signaling core to transmit preamble information associated with the pair of data-carrying core channels; and
FIG. 9 depicts another configuration of three upstream channels shown in FIG. 8, in this case where the signaling channel (core) is used to also including a ranging window.

### Detailed Description

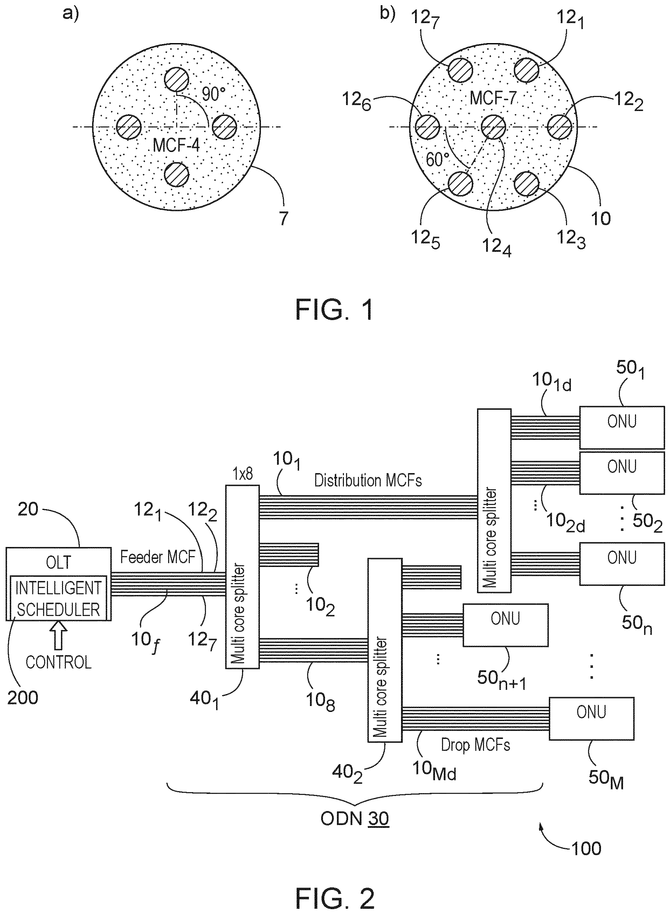

To date, PON systems have relied on the use of conventional single core optical fibre to create the infrastructure within the ODN that couples an OLT with large number of separate ONUs and provides a point-to-multipoint broadcast arrangement in the downstream direction toward the ONUs. Recent advancements in optical fibre fabrication have resulted in the ability to create fibres that comprise a plurality of separate cores disposed in a spaced-apart relationship. FIG.1 is an end view of two different multi-core fibres (MCFs) that are currently being evaluated for use in short-haul massively parallel applications (for example, within a data center). FIG. 1(a) is an end view of a 4-core MCF 1, with the cores radially spaced apart by 90°. FIG. 1(b) is an end view of a 7-core MCF 10, which is typically configured as having one core disposed along the central axis of the fibre (similar to conventional single core fibres), with a set of six separate cores disposed to surround the central core and separated from one another by 60°. While the following discussion describes implementing a PON system with a 7-core MCF, it is to be understood that various other multi-core fibre configurations may be used (such as the 4-core MCF shown above), with adjustments in the number of separate supported data channels modified accordingly.

FIG. 2 illustrates an exemplary PON system 100 based upon the use of a 7-core type of MCF within the ODN infrastructure in accordance with the principles of the present invention. The inclusion of multiple, separate core regions within a single fibre structure allows for the ODN to maintain the same single fibre physical structure of the interconnection between an OLT and multiple ONUs, yet provides a set of *k* separate, parallel communication paths (k being the number of cores formed within the fibre) within the PON system. The provision of multiple core regions allows for reconfigurable core allocations, flexibility in provided services (e.g., supporting different data modulation formats, dedicated downstream and/or upstream core links), and the ability to provide monitoring of network integrity (by dedicating one core (channel) to performing monitoring operations such as "optical time domain reflectometry" (OTDR) measurements). An intelligent scheduler 200 is shown as included at the OLT of PON system 100 and may be used, as described in detail below, to provide the core allocation functionality (perhaps in response to an external control signal such as from a network management element; internal control for scheduler 200 from within the OLT is possible as well and provide a very quick and efficient means of core allocation). A technical advance is provided in that the physical layout of the ODN itself (i.e., the various sections of MCF and the passive (multi-channel) splitters/combiners), with the devices included at the OLT and ONUs modified, as desired, to employ intelligent core allocation in a manner that best suits the needs of the customers.

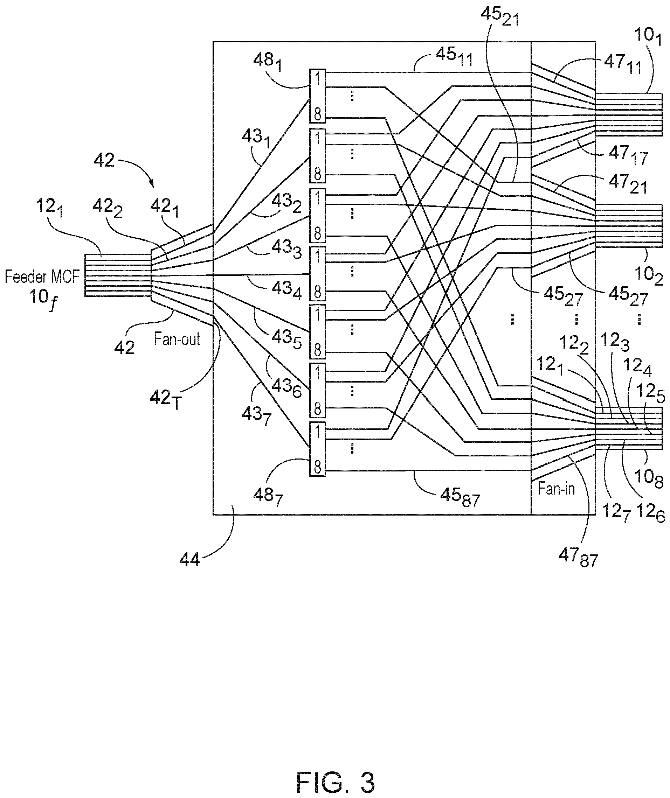

This aspect of maintaining the same physical infrastructure for an MCF-based PON system that may be reconfigured to serve different customer needs may be more fully understood by a review of FIGs. 2 and 3, as described in detail below. Reconfigurable MCF-based PON system 100 is shown in FIG. 2 as including an OLT 20 and a plurality of ONUs 50 that are interconnected by MCF-based ODN 30. In this particular depiction of an exemplary MCF-based ODN 30, a 7-core MCF is used to support communication between OLT 20 and the plurality of ONUs 50, where in order to provide the highest degree of connectivity (as well as flexibility in performing intelligent core allocation), all seven cores within the MCF are coupled into each and every ONU 50 within PON system 100. In most embodiments, as described in detail below, each separate core 12i can be thought of as a separate "channel" that supports the transmission of data between OLT 20 and the various ONUs (both downstream data from the OLT and upstream data from the ONUs, in various configurations). Thus, at times, the terms "core" and "channel" may be used interchangeably.

A first section of MCF 10 is described as a "feeder" MCF (denoted as MCF 10_{f} in FIG. 2) that is used to couple OLT 20 to an ODN 30. ODN 30 is shown as comprising a number of passive splitters/combiners 40, as well as multiple sections of MCF 10. For the sake of discussion, a passive splitter/combiner will often be referred to below simply as a "passive splitter" or simply a "splitter", describing the use of the element in the downstream direction to divide the optical power present in one input signal into a defined plurality of N separate output signals. It is to be understood that the inherent reciprocal capability of passive optic components is such that when signals pass through element 40 in the opposite direction, it functions as a "power combiner" to join together a set of N separate signals; in the case of a PON system, to form a single upstream output signal directed to the OLT.

Continuing with the description of reconfigurable, MCF-based PON system 100 of FIG. 2, ODN 30 is shown in this particular example as including a first multi-core splitter 40₁ that is configured to provide complete interconnection between feeder MCF 10_{f} and a plurality of N MCFs, shown here as a set of N=8 separate distribution MCFs 10₁, 10₂, ..., 10₈. Each passive splitter is defined as including a "single port" connection side (in this case, coupled to feeder MCF 10_{f}) and a "multiple port" connection side (in this case, each port coupled to a separate distribution MCF 10₁, 10₂, ..., 10₈). In accordance with the principles of the present invention, "complete interconnection" is to be understood that each core region within feeder MCF 10_{f} is coupled to each distribution MCF 10₁ - MCF 10₈, with the individual cores maintaining their same identity within these connections (i.e., core regions 12₁ coupled together, core regions 12₂ coupled together, and so on). In order to provide intelligent allocation of individual cores within ODN 30, the integrity of matching the cores from one section of MCF to the next must be retained. FIG. 3, as will be discussed in detail below, describes one embodiment of a specialty combiner 40 that is formed to provide this complete interconnection.

In a typical tree and branch topology of an ODN, additional splitters 40 may be used to increase the number of ultimate endpoints that are served within the PON system. Here, a pair of additional passive multi-channel power splitters 40₂, 40₃ are included within ODN 30. For illustrative purposes, the sets of MCFs 10 exiting splitters 40₂, 40₃ are referred to as "drop" MCFs 10_{1d}, 10_{2d}, ... 10_{Md}, with each drop MCF 10id terminating at a separate ONU 50 within PON system 10. As will be described in detail below, each and every ONU is configured to couple to all individual cores of the section of MCF 10 that terminates at its input. Indeed, it is contemplated that the use of multiple cores connected to all users communicating via PON system 100 enables an additional level of freedom and flexibility that had only been previously attempted by using multiplex wavelengths.

The implementation of an end-to-end, fully flexible MCF-based PON system, such as shown in FIG. 2, requires a specific type of passive splitter 40 to be used within ODN 30 to ensure that a complete interconnection between the individual cores of feeder MCF 10_{f} and the plurality of M drop MCFs 10d is created and maintained, regardless of the changes deployed within OLT 20 and ODNs 50 to deploy different service offerings. FIG. 3 illustrates an exemplary passive, multi-channel splitter 40 configured to provide this complete interconnection between the core regions of MCF 10_{f} (the feeder fibre of FIG. 2) and the core regions of the plurality of eight separate MCFs 10₁ - 10₈ (the set of distribution fibres of FIG. 2). Passive splitter 40 is shown as comprising a fan-out component 42, a splitter stage component 44, and a fan-in component 46. Fan-out component 42 is shown as providing coupling between the core regions 12 of MCF 10_{f} and a set input transmission paths 43 of splitter stage component 44. In particular, fan-out component 42 comprises a set of transmission paths 42₁, 42₂, ..., 42₇ that are coupled to the individual core regions 12₁, 12₂, ..., 12₇ of MCF 10_{f} in a one-to-one manner. Transmission paths 42₁ - 42₇ are shown as spreading apart within the plane of fan-out component 42 so as to spaced-apart by a predefined pitch at a termination 42T of fan-out component 42. The spacing between adjacent end terminations of paths 42i is determined to provide optical alignment with a plurality of input transmission paths 43₁ - 43₇ of splitter stage component 44. As shown in FIG. 3, there is a one-to-one relationship as well between fan-out transmission paths 42 and input transmission paths 43. It is to be understood that in some embodiments components 42, 44, and 46 may be integrated within a single substrate using well-known photonic integrated circuit (PIC) technology. In such embodiments, transmission paths 42, 43 may comprise optical waveguides fabricated within a suitable substrate material. The utilization of integrated optical waveguides in such a PIC-based configuration with no actual differentiation between, say, fan-out transmission path (waveguide) 42₁ and input transmission path (waveguide) 43₁, the pair of waveguides being formed as one continuous path within the integrated structure. Advantageously, such an integrated configuration thus imparts no additional loss at the various interfaces between waveguides from one component another. It is to be understood that the use of PIC-based implementation is just one example. Alternatively, a free space configuration of at least fan-out component 42 and fan-in components 46 may also be used. Various combinations of waveguide and freespace transmission paths may be used in specific applications, as needed.

Turning now to the description of splitter stage component 44, input transmission paths 43 can be described as associated with the separate channels (cores) of MCF 10 (and thus, the channels formed within PON system 100), introducing the complete set of channels into a structure that will then provide a 1:N power split to each channel, directing the N copies of each channel into a set of N output MCFs 10. Here, each input transmission path 43₁ - 43₇ is shown as provided as an input to an individual 1:8 power splitter 48. That is, input transmission path 43₁ (which may be thought of as defining a "channel 1") is provided as an input to a first 1:8 power splitter 48₁, input transmission path 43₂ ("channel 2") to another 1:8 power splitter 48₂, and so on, with input transmission path 43₇ ("channel 7") provided as an input to the final 1:8 power splitter 48₇. Each 1:8 power splitter 48i comprises a known type of passive device configured to direct an essentially equal (in most cases) power fraction of an incoming light beam into N separate output beams. Each of the N separate output beams, all carrying information (e.g., data, signaling, monitoring, etc.) associated with the same channel, is subsequently coupled into a separate interconnection transmission path 45 formed within splitter stage 44, where the plurality of interconnection waveguides 45 provides the complete interconnection of each core within MCF 10_{f} to the set of distribution MCFs 10₁ - 10₈. For clarity of the arrangement, only selected interconnection transmission paths 45 are shown in the illustration of FIG. 3. Again, it is contemplated that transmission paths 45 may be formed as integrated waveguides within a substrate (for a PIC-based arrangement), or may be embodied as freespace signal paths between the power splitters and the distribution MCFs; indeed, the complete splitter configuration may be embodied in freespace optics.

Interconnection transmission paths 45 are shown in FIG. 3 as coupled in a one-to-one arrangement with output waveguides 47 of fan-in component 46. As shown, fan-in component 46 includes a set of eight individual fan-in elements 46₁ - 46₈, associated with distribution fibres 10₁ - 10₈ in a one-to-one manner. Similar to fan-out component 44, each individual fan-in element 46₁ - 46₈ directs individual collections of transmission paths 45 (supporting channels 1 - 7) into a tapered arrangement that will align with the respective core regions 12 of distribution MCFs 10₁ - 10₈ in a known manner.

Advantageously, PIC technology may be used to form the individual waveguides and power splitters of passive multi-channel splitter 40 in a manner that creates a relatively compact element with minimal coupling losses. It is to be understood, however, that fan-out component 42, splitter stage component 44, and fan-in component 46 may also be formed as discrete elements, or a set of individual photonic elements mounted on a common substrate (or any sub-combination, such as perhaps an integrated version of splitter stage 44 and fan-in component 46). All of these arrangements are considered as useful embodiments and fall within the scope of the present invention.

In accordance with the principles of the present invention, MCF-based PON system 100, as shown in FIG. 2, may be operated in various configurations without needing to adjust the MCF-based infrastructure of ODN 30; indeed, it is an aspect of the invention that the inclusion of multiple, parallel channels provides additional degrees of freedom and flexibility in how the network may be configured in either a static or dynamic fashion and allow for intelligent assignment of specific applications/services to the individual cores. Intelligent assignment, as provided by an intelligent scheduling component at the OLT, is contemplated as including allocating each core to a specific function in accordance with the needs of a particular PON system. The needs may be related to different applications, different types of data streams (perhaps different modulation formats), and services. The provision of multiple, parallel channels between an OLT and each ONU allows for intelligent core assignment to be able to differentiate priorities, provide channel isolation (e.g., strategically assigning cores separated by 180° for two downstream data channels), throughput, latency requirements, separation of downstream from upstream, and the like.

When introducing the use of MCF within a PON system, it is to be understood that various scheduling processes and algorithms as used within the media access control (MAC) element of the OLT need to be re-configured to handle the multiple channels, as opposed to the "single channel" simpler arrangement of the prior art. For example, beyond scheduling time slot assignments in downstream and upstream data transmission, the MAC element of an MCF-based PON must also designate which core/channel will carry the individual data packets. In some embodiments, it is possible that the functionality of the intelligent scheduler, as used to perform core allocation, may be included operations performed by such a re-configured MAC element.

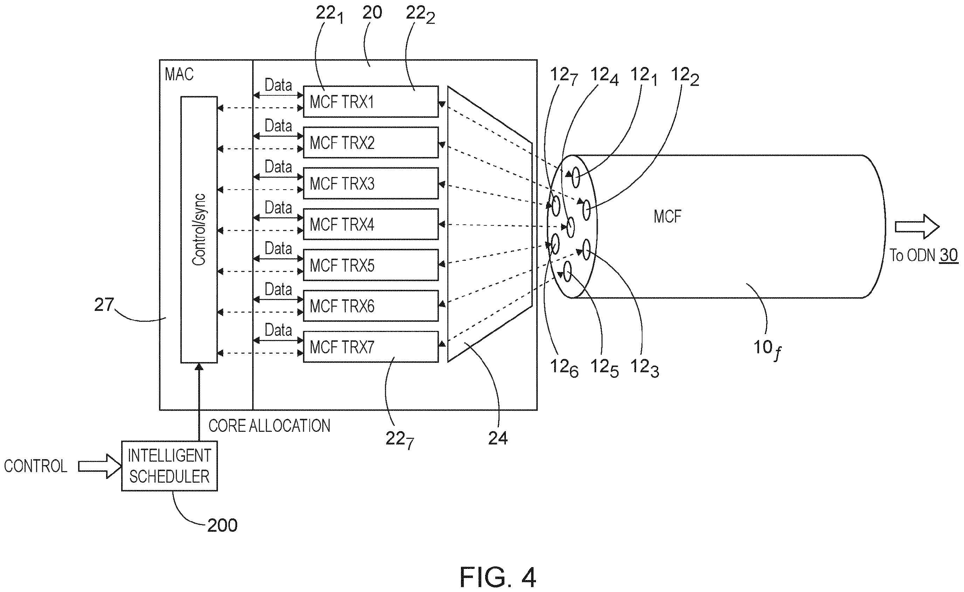

FIG. 4 illustrates a first embodiment of an OLT 20 that may be used in MCF-based PON system 100 to provide an increase in system capacity by a factor of *k* (k being the number of individual cores). In this embodiment, OLT 20 is configured to include a plurality of k separate transceivers, each transceiver coupled to a separate core region of MCF feed fibre 10_{f}. Intelligent scheduler 200 may be used to provide the assignment of the individual transceivers to the various cores, perhaps in response to an external control signal (which may be provided by a network management system). When used with 7-core MCF, such as MCF 10 described above, OLT 20 may be formed to include a set of seven individual optical transceivers 22₁ - 22₇, each transceiver 22i comprising components similar to standard OLT transceivers. A passive coupling element 24 is included within OLT 20 and is utilized to provide alignment and coupling between the output signal paths from transceivers 22 and the individual cores 12 within feeder MCF 10_{f} in a one-to-one arrangement (as shown). This is similar to the fan-in functionality as described above in association with components 46 of passive splitter 40 (as shown in FIG. 3).

A scheduling element 27 (e.g., a media access controller (MAC)) is included within OLT 20 used in to control the application of data streams from various sources to the plurality of transceivers 22, in a manner similar to that used in WDM embodiments of a PON system. In various embodiments, scheduling element 27 may also be configured to provide functionality of intelligent scheduler 200 and have the capability to reconfigure the transceiver-core assignment, as need be.

In the embodiment of OLT 20 as shown in FIG. 4, communication is provided on seven separate channels between OLT 20 and ONUs 50, significantly increasing the capacity of PON system 100 when compared to the standard arrangement that provides communication along only a single channel (core) between OLT 20 and the plurality of ONUs. While not explicitly shown, an example ONU 50 would look substantially the same as OLT 20, including a plurality of transceivers that are interconnected with the multiple core regions within a drop MCF_{id} terminating at the ONU. In order to create burst mode upstream data packets (as in a typical ONU), each transceiver is necessarily controlled to provide the proper timing for inserting the upstream data along the proper channel.

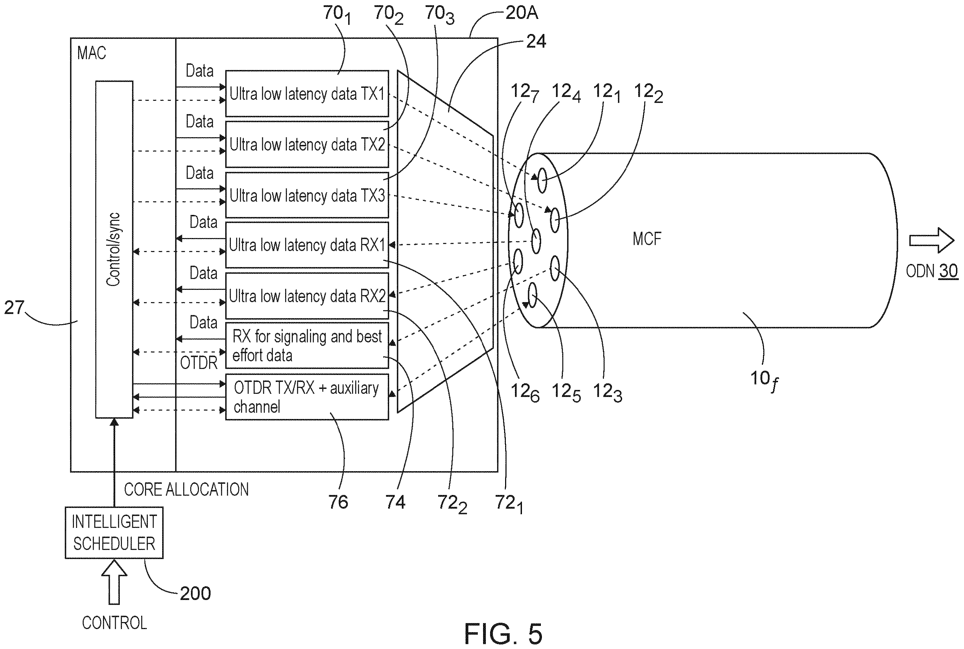

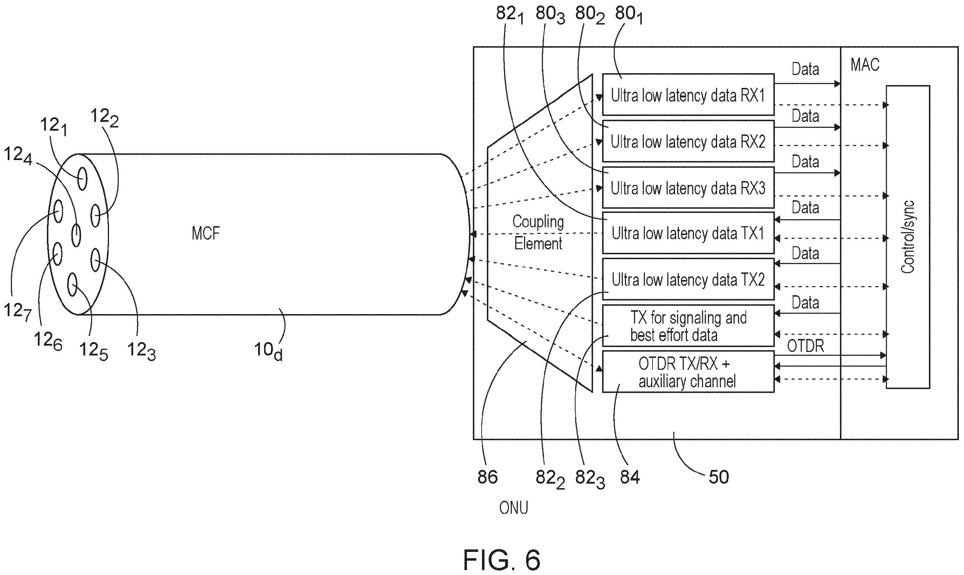

FIG. 5 illustrates a reconfiguration of PON system 100, utilizing the same MCF-based ODN infrastructure as described above, but in this case utilizing a different arrangement of elements within the OLT and ONUs. In particular, the arrangement as shown in FIGs. 5 and 6 depict one example of intelligent core allocation in accordance with the teachings of the present invention in a manner that supports different features and functionality within the PON system (different in comparison to the arrangement of FIG. 4, for example). In the reconfiguration shown in FIG. 5, an OLT 20A is implemented to employ individual transmitter and receiver elements (typically simpler and less expensive than transceivers), with each transmitter or receiver allocated to a different core (channel) within MCF 10_{f}. Intelligent scheduler 200 may be used to perform the allocation of the individual transmitter and receiver elements to the individual cores within MCF 10_{f}. In this particular example, six of the seven cores 12 within feeder MCF 10_{f} are used as uni-directional signal paths, with a seventh core reserved for carrying monitoring information (or perhaps as a "spare" channel should demand for capacity increase). Shown in this embodiment, a first set of three cores (depicted in this example as cores 12₁, 12₂, 12₇) are assigned as "downstream" channels, and associated with a set of three transmitter elements 70₁, 70₂, and 70₃ in a one-to-one manner. Another pair of cores (here, cores 12₄ and 14₆) are dedicated to providing "upstream" traffic and are associated with a pair of receiver elements 72₁ and 722 within OLT 20A. A separate "best effort" and signaling information receiver 74 is included within OLT 20A and is used to receive upstream "control" information that is transmitted along core 123 and used in a manner described below. Coupling element 24 is used in the same manner as described above in association with OLT 20 of FIG. 4 to provide alignment and coupling between the individual transmitter or receiver components of OLT 20A and core regions 12 of MCF 10_{f}.

By providing this type of dedicated uni-directional channels, an MCF-based PON system of the present invention is able to provide intelligent channel assignment in a manner such that specific services may be offered to various ones of the ONUs. For example, transmitters 70₁ and 70₂ may be designated as supporting the transmission of ultra-low latency (ULL) data, with the receiving components at the termination of "channel 1" and "channel 2" within each ONU accordingly configured to properly handle this type of transmission.

In the embodiment shown in FIG. 5, remaining core region 12₅ of MCF 10_{f} is shown as being used to support monitoring operations (e.g., OTDR) and therefore allows for the bi-directional transmission of test signals and return reflections. As described below, this channel may also be defined as an "auxiliary channel" and used to support the transmission of additional data traffic (upstream or downstream), should the need arise for extra capacity. The need for extra capacity may only be temporary, with this channel returned to its previous monitoring function when the demand for capacity drops, where intelligent scheduler 200 may be configured to provide this dynamic change in core allocation. Depending on customer needs at the individual ONUs, provided services and capacity can be upgraded on demand in a timely manner within MCF-based PON system 100, via communication with intelligent scheduler 200.

It is to be understood that a significant feature of a MCF-based PON system is that various ones of the passive elements of the system remain the same, regardless of the application. Only different ones of the individual transmitters, receivers, transceivers, etc., need to be re-configured to provide a different allocation of services within the network. This is evident by comparing the arrangement of OLT 20 of FIG. 4 with OLT 20A of FIG. 5. Moreover, inasmuch as the MCF-based ODN 30 still takes the form of an individual optical fibre, the separate core regions are presumed to exhibit essentially the same physical characteristics, minimizing the possibility of skew (phase error/offset) being introduced between the cores, or having the cores experience different environmental factors.

FIG. 6 illustrates an exemplary ONU 50A that may be used with OLT 20A as described above. In particular, ONU 50A includes a set of three ULL receivers 80₁, 80₂, 80₃, coupled to cores 12₁, 12₂ and 12₇ of its drop fibre MCF 10d. By virtue of maintaining separate and distinct communication channels on each fibre core through all of the passive components forming ODN 30, receiver 80₁ of ONU 50A receives the ULL signal sent from transmitter 72₁ along "channel 1" (core 121) of its drop MCF 10_{Ad}. Similarly, receiver 80₂ of ONU 50A receives the ULL signal from transmitter 72₂ from core 12₂, and receiver 80₃ receives the ULL signal from transmitter 72₃ along core 12₇.

ONU 50 also includes a pair of ULL transmitters 82₁ and 82₂ that directly communicate with ULL receivers 72₁, 72₂ at OLT 20A (see FIG. 5) by virtue of being coupled to cores 12₄ and 12₆, respectively, of drop MCF 10_{Ad}. As with conventional PON systems, the transmitters within ONUs 50 operate in a controlled, burst mode fashion as required for a time-division multiple access (TDMA) signaling scheme.

A separate transmitter 82₃ within ONU 50A is coupled to core region 12₃ of drop MCF 10_{Ad} and used in this particular configuration of MCF-based PON system 100 to transmit upstream signaling information (such as preamble portions of upstream ULL data, as described below) to OLT 20A (specifically, to MAC 27 within OLT 20A). In the particular arrangement as shown in FIG. 6, an OTDR component 84 is coupled to remaining core 12₆ and used in combination with similar equipment within OLT 20A to monitor the performance/status of ODN 30. A coupling element 86 is included within ONU 50 and used in the manner described above to provide aligned coupling between the individual core regions 12₁ - 12₇ of MCF 10d and elements 80, 82, 24 within ONU 50.

Expanding on the concept of allocating a specific core (channel) to carry upstream signaling information, the ability to parse this information from its associated upstream data packet results in reduces the waiting time of data packets in the buffer of the ONU. Thus, the actual core regions (here 12₄, 12₆) used to support upstream low latency services may now be able to provide "ultra low latency" (ULL) service, by virtue of the reduced buffer sizes

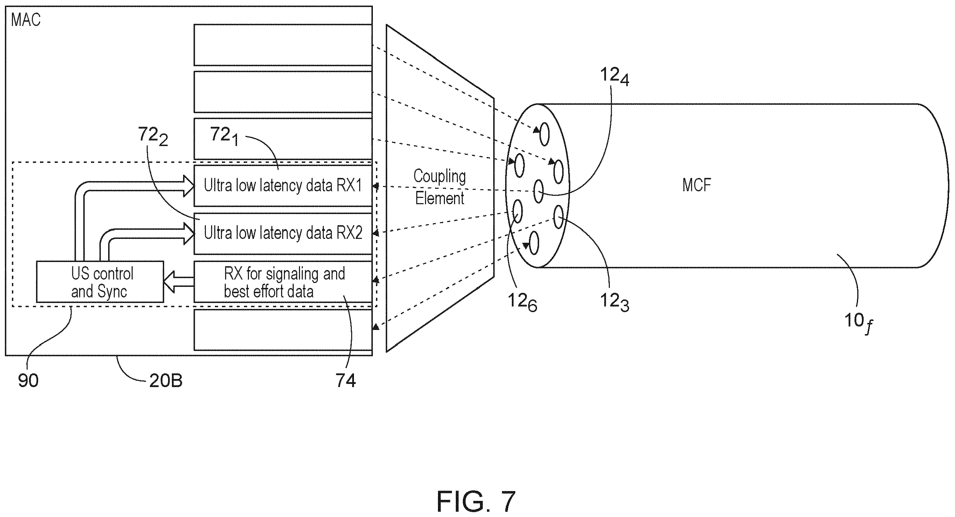

FIG. 7 illustrates relevant elements within an OLT 20B that may be used to implement the use of a separate signaling channel within the MCF infrastructure of the inventive MCF-based PON system. In this example, OLT 20B supports a similar arrangement of upstream and downstream dedicated channels as discussed above in association with FIGs. 5 and 6, with the understanding that preamble signaling information associated with the upstream data from ONU transmitters 82₁, 82₂ (being sent along cores 12₄, 12₆) has been transferred to the signaling channel supported by core 12₃.

OLT 20B is shown as including an upstream control/sync component 90 that receives all of the signaling information delivered by core 12₃ of MCF 10_{f} to signaling receiver 74. Upstream control/ sync component 90 extracts the proper address information from the received signaling information and uses this to direct the signaling preambles for each ULL data burst to the proper receiver (i.e., either receiver 72₁ or 72₂). Thus, during operation of MCF-based PON system 100, signaling and control information (e.g., OMCI, PLOAM, and the like) associated with the one or more upstream low latency data channels (cores) is transferred to a dedicated signaling channel (core), resulting in a configuration where at least two separate cores are dedicated for use in upstream transmission.

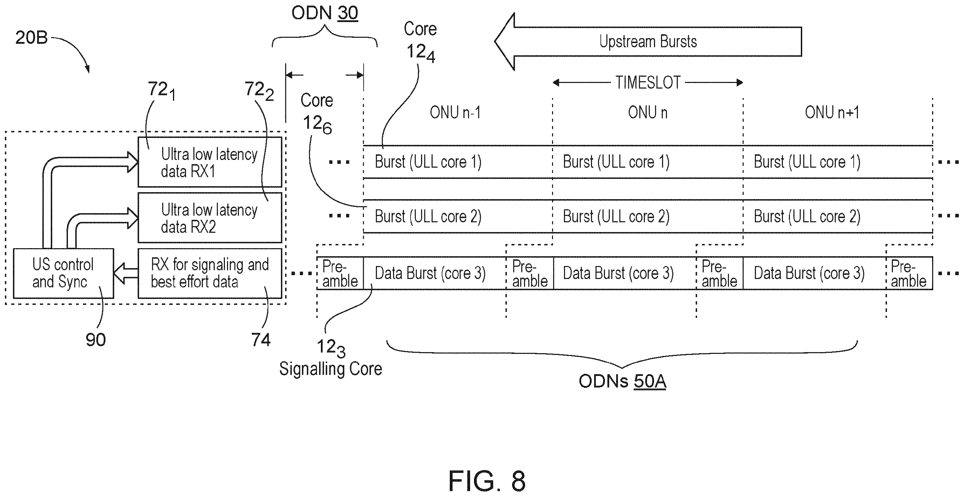

FIG. 8 illustrates this use of signaling core 12₃ to carry the control information (preamble) related to the upstream data bursts being transmitted via cores 12₄ and 12₆. Depicted here are the elements of OLT 20B associated with this configuration, as well as the channels used for upstream transmission through the MCF infrastructure of ODN 30. In this case, cores 12₄ and 12₆ are configured to support upstream data bursts originating from the plurality of ONUs 50 within the network, with sequential time slots along each core allocated to the individual ONUs in turn. Here, each ONU is permitted to load a separate data packet onto each upstream path (i.e., both cores 12₄ and 12₆) during its assigned time slot, which essentially doubles the upstream data rate. The preamble information for those data packets is shown as positioned within the same time slot of signaling core 12₃, and therefore reaches OLT 20B at the same time. Additionally, since portions of the preamble information may be the same for each core, the ability to collect all of the preamble information allows for duplicative information to be removed (i.e., condensing the amount of preamble needed to be transmitted for the multiple cores) and further increase the efficiency of operation of PON system 100.] As described above, the preamble information is processed by upstream control/ sync element 90 and thereafter directed to the proper receiver element 72₁ or 722.

It is clear from a review of FIG. 8 that by virtue of removing the data packet preamble information from upstream data channels, it becomes possible to increase the amount of data transmitted during an assigned time slot, perhaps reaching the level of "ultra low latency" (ULL) operation along that channel. This is possible because of the common MAC interface (specifically, upstream control/synchronization component 90) and common physical parameters that enable for a synchronization between the different uplink cores. Effort for phase alignment is reduced to a minimum extent as well based on the common physical parameters among the several cores as all formed within the same single optical fibre.

Furthermore, the utilization of a MCF-based PON system eliminates the need to open ranging windows on the ULL upstream core(s) to monitor for changes in ONU organization, since ranging windows can also be provided within the designated signaling core (e.g., core 12₃). Since ONUs are located at different distances from the OLT, the upstream travel times of their respective transmissions also differ. Therefore, to ensure that data arrive in the correct time slots at the OLT and prevent collisions between upstream transmissions from different ONUs, the physical difference in distances from the respective ONUs to the OLT must be compensated for through transmission delays. Typically, an ONU that is located a closer distance from the OLT shall apply a larger transmission delay than an ONU that is located at a farther distance from the OLT. As a result of the so-called equalisation delays, each ONU is located at the same virtual distance from the OLT. The process by which the distances from the ONUs to the OLT are determined and wherein the so-called equalisation delays to be applied to the different ONUs are calculated, is generally known as the "ranging" process. Ranging must be applied when a PON system is first activated and each time a new, unranged ONU connects with the OLT. A ranging window is a specific time slot typically reserved as a "quiet" time for actual data transmission so that any new ONUs may be discovered and ranged.

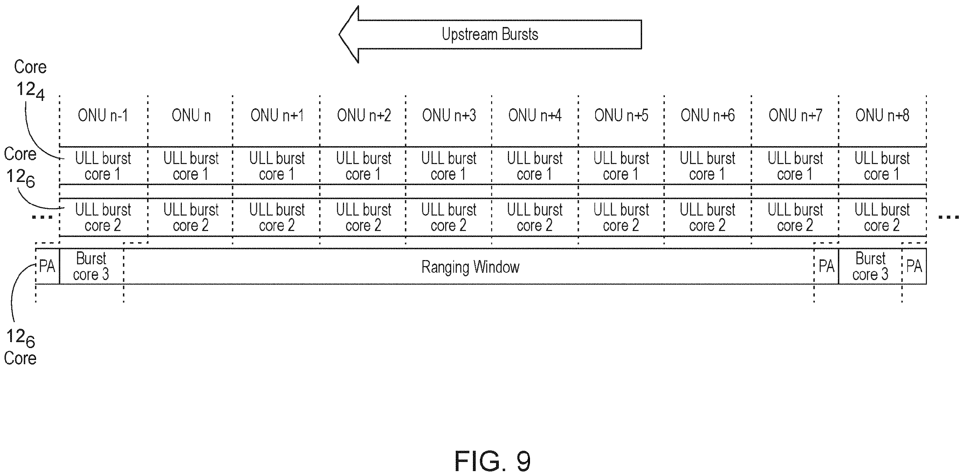

Advantageously, the inclusion of a separate signaling channel within the MCF-based PON system of the present invention allows for a ranging window to be inserted within this signaling channel, eliminating the need to interrupt transmissions along the upstream data channels to perform this function. FIG. 9 shows one implementation of this feature, illustrating the provision of a ranging window within signaling core 12₃, while the upstream core links 12₄ and 12₆ are still in full operation.

Beyond these techniques, it is contemplated that the topology of a MCF-based PON system may be intentionally constructed to take further advantage of the presence of parallel communication channels within the network. For example, creating (defining) clusters of ONUs and assigning the different clusters to different cores of the MCF can additionally reduce the system latency. Indeed, the fewer ONUs allocated to a core, the lower the latency of that particular channel. In the borderline case for one ONU per core, no additional latency appears.

It is remarked that in the above-described embodiments, the presence of a single OLT at a central office of a communication network is assumed for the sake of simplicity. In the field, however, central offices will usually host multiple OLTs. Additionally, the person skilled in the art of optical telecommunication infrastructure shall appreciate that PONs may have more complex tree-and-branch architectures with multiple passive optical splitters/combiners that direct the various signals, supported by multiple channels, in the manner described above.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuits(s) with software/firmware and
   (ii) any portions of hardware processor(s) with software (including digital signal processor(s)), software, and memory(ies) that work together to cause an apparatus, such as a mobile phone or server, to perform various functions), and
(c) hardware circuit(s) and/or processor(s), such as microprocessor(s) or a portion of a microprocessor(s) that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

It will furthermore be understood that the terms "comprising" or "comprise" do not exclude other elements or steps, that the indefinite articles "a" or "an" do not exclude a plurality, and that a single element, such as a computer system, a processor, or another integrated unit may fulfill the functions of several means as recited in the claims. Any reference signs in the claims shall not be construed as limiting the respective claims concerned. The identifying terms "first", "second", "third", "a", "b", "c", and the like, when used in the description or the claims are introduced to distinguish between similar elements or steps and are not necessarily describing a sequential or chronological order. Similarly, the descriptive terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

When an element is referred to as being "connected" or "coupled" to another element, it can be directly connected or coupled to the other element, or intervening elements may be present. By contrast, when an element is specifically referred to as being "directly connected", or "directly coupled", to another element, there are no intervening elements present. Other words used to describe the relationship between elements should be interpreted in like fashion (e.g., "between" versus "directly between", "adjacent" versus "directly adjacent", and the like).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

## Claims

1. A passive optical network (PON) system (100) including
an optical line terminal (OLT) (20) for providing point-to-multipoint communication with a plurality of optical network units (ONUs) (50); and
a multi-core fibre (MCF)-based optical distribution network (ODN) (30) for enabling reconfigurable point-to-multipoint communication between the OLT and the plurality of ONUs, the ODN comprising:
at least one passive splitter/combiner (40) including a single port connection side and a multiple port connection side; and
a plurality of sections of MCF (10) including a feeder section of MCF (10_{f}) for coupling the OLT to the single port connection side of at least one passive splitter/combiner and a set of M drop sections of MCF (10d) for coupling the plurality of M ONUs to the multiple port connection side of at least one passive splitter/combiner, wherein each section of MCF comprises a plurality of k separate core regions (12₁ - 12k) forming a plurality of k separate, parallel communication channels between the OLT and each ONU of the plurality of ONUs.

2. The PON system of claim 1, further comprising
means (200) for performing intelligent scheduling of the plurality of *k* parallel, separate channels, including allocation of individual channels to different services, types of data, signaling, or monitoring functions.

3. The PON system of claim 2 wherein the means for performing intelligent scheduling performs allocation of individual channels based on capacity demands for downstream communication and upstream communication, including priorities assigned to different PON system users.

4. The PON system of claims 1 or 2 wherein the at least one passive splitter/combiner comprises
a fan-out coupling element (42) at the single port connection side and including a plurality of *k* transmission paths, associated with the plurality of *k* separate core regions of a coupled MCF;
a power splitting stage (44) including
a plurality of *k* 1:N power splitters (48), each having as an input a separate one of the plurality of k transmission paths and providing as an output a plurality of N power-split replicas; and
a plurality of kN transmission paths (45) disposed along the outputs of the plurality of *k* 1:N power splitters, the plurality of kN transmission paths organized to direct N separate sets from the plurality of *kN* transmission paths to spaced-apart locations along the output termination of the power splitting stage, each separate set associated with *k* identifiable core regions; and
a plurality of N fan-in coupling elements (46) disposed along the output termination of the power splitting stage, each fan-in coupling element providing an optical connection between a set of *k* identifiable core regions and a section of MCF.

5. The PON system of claim 1 wherein
the OLT is configured to include *k* separate optical transceivers (22), each optical transceiver coupled to a separate one of the *k* core regions of the feeder section of MCF coupled thereto; and
each ONU of the plurality of ONUs is configured to include *k* separate optical transceivers, each optical transceiver coupled to a separate one of the *k* core regions of the drop section of MCF coupled thereto, the arrangement of the OLT and the plurality of ONUs with the MCF-based ODN providing a plurality of *k* separate, parallel communication channels within the PON system to enable a high capacity system.

6. The PON system of claims 2 or 3 wherein
the OLT is configured to include *k* separate optical transceivers (22);
the means for performing intelligent scheduling is utilized to control the allocation of individual OLT optical transceivers to separate core regions of the plurality of *k* core regions of the feeder section of MCF coupled thereto; and
each ONU of the plurality of ONUs is configured to include *k* separate optical transceivers, each optical transceiver coupled to a separate one of the *k* core regions of the drop section of MCF coupled thereto, the arrangement of the OLT and the plurality of ONUs with the MCF-based ODN providing a plurality of *k* separate, parallel communication channels within the PON system to enable a high capacity system.

7. The PON system of claims 1, 2 or 3 wherein a signaling channel (12₃) is established between the OLT and the plurality of ONUs by allocating one core region from the plurality of *k* core regions as a signaling core, supporting the transmission of signaling information between the ONUs to the OLT.

8. The PON system of claim 7 wherein the signaling channel is used to transmit preamble information associated with upstream data bursts.

9. The PON system of claim 7 wherein the signaling channel is configured to include recurring open ranging windows for identifying new ONUs added to the PON system.

10. The PON system of any of claims 7, 8 or 9 wherein the OLT is configured to include an upstream control/ sync element (90) coupled to the signaling channel for recovering and directing signaling to a designated receiving element within the OLT.

11. The PON system of claims 1, 2 or 3 wherein a monitoring channel (12s) is established between the OLT and the plurality of ONUs by allocating one core region from the plurality of *k* core regions within the MCF-based ODN.

12. The PON system as defined in claim 11 wherein the OLT is configured to include OTDR measurement equipment for injecting monitoring signals into the monitoring channel.

13. The PON system of claims 1, 2, or 7-10 wherein
the OLT is configured to include one or more separate transmitter elements (70), each transmitter element allocated to a separate core region of the feeder MCF, and one or more separate receiver elements (72), each receiver element also allocated to a separate core region of the feeder MCF, the collection of separate transmitter and receiver elements not exceeding *k*, wherein this configuration provides dedicated downstream and upstream communication paths through the MCF-based ODN along the separate regions of the plurality of *k* core regions.

14. The PON system of claim 13 wherein the OLT further comprises a fan-in coupling element (24) to connect the one or more separate transmitter elements and the one or more separate receiver elements to the allocated separate core regions of the associated feeder MCF.

15. The PON system of any preceding claims wherein the at least one passive power splitter/combiner of the ODN comprises a plurality of passive splitters/combiners, including a distribution splitter/combiner coupled to the feeder MCF and a set of drop splitter/combiners, the multiple ports of the set of drop splitter/combiners coupled to the drop MCFs.
